# EUROPEAN PATENT APPLICATION

(11) **EP 4 601 071 A1**
(43) Date of publication of application: **13.08.2025**
(21) Application number: 25150219.1
(22) Date of filing: 03.01.2025
(51) Int. Cl.: H01M 10/42, H01M 50/207, H01M 50/284, H01M 50/519, H01M 50/213, H01M 50/287, H01M 50/569

(54) **BATTERY PACK**

(30) Priority: 07.02.2024 KR 20240019055
(71) Applicant: SAMSUNG SDI CO., LTD., Yongin-si, Gyeonggi-do 17084 (KR)
(72) Inventor: Park, Sanghun, 17084 Yongin-si, Gyeonggi-do (KR)
(74) Representative: Gulde & Partner

(57) **Abstract**

A rechargeable battery pack (100) includes a holder (10) with an accommodation space (11a) therein, a plurality of unit battery cells (12) in the accommodation space, a connection tab (20) electrically connecting the plurality of unit battery cells at an upper part of the holder, a busbar (30) including a connector (35) electrically connected to the connection tab and extending to the upper part of the holder, a BMS circuit (60) electrically connected to the connector, and a support (50) between the connector and the BMS circuit, and supporting the BMS circuit on an upper surface of the holder.

## Description

### BACKGROUND

### 1. Field

The present disclosure relates to a rechargeable battery pack.

### 2. Description of the Related Art

In general, rechargeable batteries, which may be charged and discharged, have been widely used as a power source for wireless mobile devices. In addition, rechargeable batteries have attracted considerable attention as a power source for electric vehicles (EV) and hybrid electric vehicles (HEV), which have been developed to solve problems, such as air pollution, caused by existing gasoline and diesel vehicles using fossil fuels.

If such a battery is alternately charged and discharged, the battery is typically managed such that the charging and the discharging of the battery is controlled to maintain appropriate operation status and performance.

To this end, a battery management system (BMS) which manages the status and the performance of the battery is utilized. The BMS manages the battery by measuring a current, a voltage, or a temperature of the battery and recording them in memory.

The BMS is electrically connected to the battery in the rechargeable battery pack by a busbar and manages the status and performance of the battery.

However, if the connection portion between the busbar and the BMS cannot maintain a horizontal position, it is difficult to make a reliable electrical connection, which reduces durability.

### SUMMARY

Embodiments include a rechargeable battery pack, including a holder with an accommodation space therein, a plurality of unit battery cells in the accommodation space, a connection tab electrically connecting the plurality of unit battery cells at an upper part of the holder, a busbar including a connector electrically connected to the connection tab and extending to the upper part of the holder, a BMS circuit electrically connected to the connector, and a support between the connector and the BMS circuit, and supporting the BMS circuit on an upper surface of the holder.

The holder may include a first holder including a plurality of accommodation spaces accommodating parts of the unit battery cells and a first connection tab may be at a lower part of the holder, and a second holder including a plurality of accommodation spaces accommodating other parts of the plurality of unit battery cells and a second connection tab may be at an upper part of the holder.

The busbar may include a busbar plate extending from a side surface of the second holder in a first direction and fixed by a fastening member, a connection protrusion protruding from an edge of the busbar plate, extending toward the upper part of the second holder, and electrically connected to the first connection tab, and a connector protruding from the edge of the busbar plate, extending toward the upper part of the second holder, and electrically connected to the BMS circuit.

The support may include a round block supporting a lower surface of the BMS circuit.

The round block may have a round surface supported by an upper side of the connector on a first side surface thereof, and a flat surface supported by the lower surface of the BMS circuit on a second side surface facing or opposite the first side surface.

A supporting protrusion supporting the connector may protrude from the upper surface of the holder.

A round support supporting the connector may be in an upper part of the supporting protrusion.

The round support may include a round part on the upper part of the supporting protrusion and may have a round surface on the upper part thereof, and a pair of fixing pieces bent in a lateral direction of the connector on opposite sides of the round part.

The pair of fixing pieces may be inside of a side surface of the round part.

The support may further include a fixed part seated on the connector of the busbar, a part of which is affixed to the BMS circuit.

The fixed part may include a supporting plate on a surface of the connector of the busbar, and an insertion protrusion protruding from an edge of the supporting plate and inserted into and affixed to the BMS circuit.

A fastening hole through which a fastening member may be coupled is in the round block, a first through hole through which the fastening member passes may be on the connector, and a second through hole through which the fastening member passes may be on the supporting plate.

A groove may be on the upper surface of the round support into which an end of the fastening member may be inserted.

A tapered surface may be at an edge of the through hole in contact with the round part of the supporting protrusion.

### BRIEF DESCRIPTION OF THE DRAWINGS

Features will become apparent to those of skill in the art by describing in detail exemplary embodiments with reference to the attached drawings, in which:
FIG. 1 is an exploded perspective view of the main part schematically illustrating a rechargeable battery pack according to one or more embodiments of the present disclosure;
FIG. 2 is a perspective view of the main part schematically illustrating a supporting protrusion and a round support protruding from the upper side of a holder according to one or more embodiments of the present disclosure to support a connector of a busbar;
FIG. 3 is a perspective view of the main part schematically illustrating the support installed on the upper side of the connector of the busbar according to one or more embodiments of the present disclosure;
FIG. 4 is a side view schematically illustrating the support installed on the upper side of the connector of the busbar of FIG. 3 according to one or more embodiments of the present disclosure;
FIG. 5 is a cross-sectional view of the main part schematically illustrating the connector of the busbar and a BMS circuit electrically connected by the support according to one or more embodiments of the present disclosure;
FIG. 6 is a perspective drawing of the main part schematically illustrating an insertion protrusion of the support inserted into and fixed to the BMS circuit according to one or more embodiments of the present disclosure; and
FIG. 7 is a cross-sectional view of the main part schematically illustrating the support installed on the upper side of the connector of the busbar according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those of ordinary skill in the art to which the disclosure pertains.

In the drawing figures, the dimensions of layers and regions may be exaggerated for clarity of illustration. It will be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present.

As those of ordinary skill in the art would realize, the described embodiments may be modified in various different ways, all without departing from the scope of the present disclosure. The drawings and description are to be regarded as illustrative in nature and not restrictive, and like reference numerals designate like elements throughout the specification.

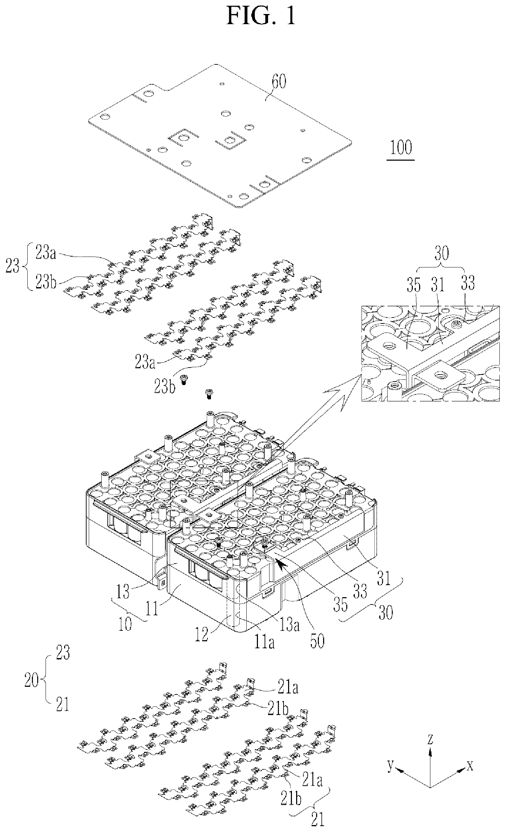

FIG. 1 is an exploded perspective view schematically illustrating a rechargeable battery pack 100 according to one or more embodiments of the present disclosure.

As shown in FIG. 1, a rechargeable battery pack 100 according to one or more embodiments of the present disclosure may include a holder 10 with a plurality of accommodation spaces 11a and 13a therein, a plurality of unit battery cells 12 in the plurality of accommodation spaces 11a and 13a, a connection tab 20 electrically connecting the plurality of unit battery cells 12 at an upper part of the holder 10, a busbar 30 including a connector 35 electrically connected to the connection tabs 20 and extending to the upper part of the holder 10 (e.g., second holder 13), a BMS circuit 60 also on the upper part of the holder 10 and electrically connected to the connector 35, a support 50 compensating for a slope between a lower surface of the BMS circuit 60 and an upper surface of the connector 35 to horizontally support (e.g., the x/y plane of FIG. 1) the BMS circuit 60 with respect to the upper surface of the holder 10.

The holder 10 may have the plurality of accommodation spaces 11a and 13a therein so that the plurality of unit battery cells 12 may be accommodated therein.

The accommodation spaces 11a and 13a are in plural numbers inside the holder 10 and may be arranged in a plurality of rows and columns with respect to the entire area of the holder 10, so that the plurality of unit battery cells 12 may be inserted into the holder 10 in a plurality of rows and columns.

The holder 10 may include a first holder 11 and a second holder 13 that accommodate the plurality of unit battery cells 12.

The first holder 11 may have a plurality of first accommodation spaces 11a therein, in which a part of the plurality of unit battery cells 12 is accommodated.

The first holder 11 may have the first accommodation space 11a in a plurality of rows and columns so that a part of the plurality of unit battery cells 12 may be accommodated therein.

The second holder 13 may be on the upper part of the first holder 11, and the plurality of second accommodation spaces 13a for accommodating the plurality of unit battery cells 12 together with the first holder 11 may be therein.

In the second holder 13, the second accommodation space 13a may be in a plurality of rows and columns so that a part of the plurality of unit battery cells 12 may be accommodated therein.

The connection tabs 20 may be installed on the first holder 11 and the second holder 13.

The connection tab 20 may include a plurality of first connection tabs 21 electrically connecting the lower part of the plurality of unit battery cells 12 at the lower part of the holder 10, and a plurality of second connection tabs 23 electrically connecting the upper part of the plurality of unit battery cells 12 at the upper part of the holder 10.

The plurality of first connection tabs 21 may include a first tab plate 21a on the lower part of the first holder 11, and a plurality of first tab protrusions 21b protruding from an edge of the first tab plate 21a to be electrically connected to the plurality of unit battery cells 12.

The first tab plate 21a may include a plurality of first tab plates spaced apart from each other and affixed to the lower part of the first holder 11, and may be electrically connected to a part of the plurality of unit battery cells 12 at the lower part of the first holder 11. A plurality of first tab protrusions 21b may protrude from the edge of the first tab plate 21a.

A plurality of first tab protrusions 21b may protrude along the edge of the first tab plate 21a and be electrically connected to the plurality of unit battery cells 12.

The plurality of first tab protrusions 21b may protrude on opposite sides of the first tab plate 21a depending on the arranged position of the first tab plate 21a, and may also protrude from any one edge position.

The second connection tab 23 may be installed on the upper part of the second holder 13 to electrically connect the plurality of unit battery cells 12.

The second connection tab 23 may include a plurality of second tab plates 23a on the upper part of the second holder 13, and a plurality of second tab protrusions 23b protruding from an edge of the second tab plate 23a to be electrically connected to the plurality of unit battery cells 12.

A plurality of second tab plates 23a may be spaced apart from each other and affixed to the upper part of the second holder 13, and may be electrically connected to a part of the plurality of unit battery cells 12 at the lower part of the second holder 13. A plurality of second tab protrusions 23b may protrude from the edge of the second tab plate 23a.

The second tab plate 23a may be a plurality of tab plates spaced apart from each other and affixed to the upper part of the second holder 13, and may be electrically connected to a part of the plurality of unit battery cells 12 on the upper part of the second holder 13. A plurality of second tab protrusions 23b may protrude from the edge of the second tab plate 23a.

A plurality of second tab protrusions 23b may protrude along the edge of the second tab plate 23a and be electrically connected to the unit battery cell 12.

A plurality of second tab protrusions 23b may protrude on opposite sides of the second tab plate 23a depending on the arranged position of the second tab plate 23a, and may also protrude at an edge position on one side.

The above-mentioned first connection tab 21 and second connection tab 23 may be respectively installed on the first holder 11 and the second holder 13 to electrically connect the plurality of unit battery cells 12 to each other.

A busbar 30, including a connector 33 electrically connected to the connection tab 20 and extending to the upper part of the holder 10 may be included.

The busbar 30 may be installed on the first holder 11 and the second holder 13, respectively, thereby electrically connecting the BMS circuit 60 and the plurality of unit battery cells 12.

For example, the busbar 30 may include a busbar plate 31 extending from a side surface of the holder in a first direction and fixed by a fastening member, and the connector 35 may protrude from an edge of the busbar plate 31, extending toward the upper part of the holder 10, and electrically connected to the BMS circuit 60.

The busbar plate 31 may be installed on the side of the holder 10 including the first holder 11 or the second holder 13, extending in the first direction (e.g., the x-axis direction in FIG. 1).

The connection protrusion 33 of the busbar plate 31 may be electrically connected to the connection tab 20 protruding from an edge extending from the side surface of the holder 10 in the first direction.

The connection protrusion 33 may extend curvedly from the edge of the busbar plate 31 to the position of the connection tabs 20, and may be electrically connected to the connection tabs 20 by a fastening member 15, such as a bolt.

For stable fixation of the busbar plate 31 to the side surface of the holder 10 and stable electrical connection to the connection tabs 20, a plurality of connection protrusions 33 may protrude.

A connector 35 may be connected to the BMS circuit 60 and may protrude from the busbar plate 31.

One side of the connector 35 may be connected to the edge of the busbar plate 31, and the other side of connector 35 may extend in the upper direction of the holder 10 to be electrically connected to the BMS circuit 60.

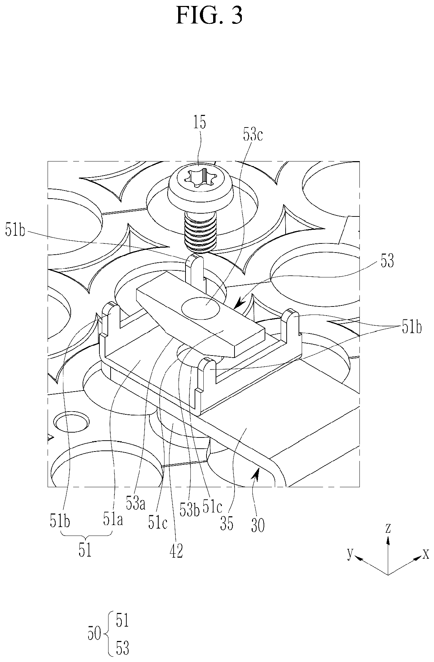

The connector 35 may be electrically connected to the BMS circuit 60 by the fastening member 15 (see, e.g., FIG. 3) and inserted between the BMS circuit 60 and the upper part of the holder 10.

The lower part of the connector 35 may be supported on a supporting protrusion 42 on the upper side of the holder 10.

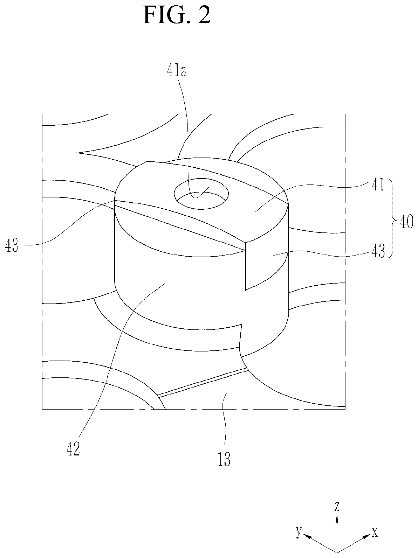

FIG. 2 is a perspective view of a main part schematically illustrating a supporting protrusion and a round support protruding from the upper side of a holder according to one or more embodiments of the present disclosure to support a connector of a busbar.

As shown in FIG. 2, the supporting protrusion 42 may be on the upper side of the second holder 13 as a columnar projection on the upper side of the second holder 13 so that the connector 35 may be supported while being spaced apart from the upper surface of the second holder 13. The supporting protrusion 42 is not necessarily limited to a cylindrical shape, and may instead be a polygonal column shape, or the like.

A round support 40 may be inserted into the upper part of the supporting protrusion 42.

The round support 40 supports the flat lower surface of the connector 35 of the busbar 30, and may be inserted into the supporting protrusion 42 to enable stable support in response to the installed slope of the connector 35.

For example, the round support 40 may include a round part 41 on the upper part of the supporting protrusion 42 and having a round surface on the upper part, and a pair of fixing pieces 43 that are bent in the lateral direction of the connector 35 on opposite sides of the round part 41 and inserted into the side surface of the supporting protrusion 42.

The round part 41 may protrude from the upper part of the supporting protrusion 42, and a round surface may be on the upper surface.

The round part 41 may have a round surface that supports the lower surface of the connector 35 of the busbar 30, and the upper surface may have a round shape with a certain curvature, allowing stable support corresponding to the installed slope of the connector 35. A groove 41a into which the end of the fastening member 15 is inserted may be in the round part 41.

Each of the pair of fixing pieces 43 may be curved on opposing sides of the round part 41.

The pair of fixing pieces 43 may also each be bent in the lateral direction of the supporting protrusion 42 on opposing sides of the round part 41, and may be pressed and fixed while being inserted into opposing sides of the supporting protrusion 42 in the process of fixing the round support 40 to the upper part of the supporting protrusion 42.

The pair of fixing pieces 43 may also be inserted into the interior of the side surface of the supporting protrusion 42. That is, insertion grooves (not shown) into which the fixing piece 43 may be inserted may be on opposing sides of the supporting protrusion 42.

Therefore, the pair of fixing pieces 43 may be installed with the insertion groove inserted into the inside of the side surface of the supporting protrusion 42, which prevents the fixing piece 43 from interfering with neighboring parts and permits stable installation.

The connector 35 may be inclined to be inserted between the BMS circuit 60 and the holder 10. For stable connection between the connector 35 and the BMS circuit 60, a support 50 may be installed between the BMS circuit 60 and the holder 10. A first through hole 35a for fixing the fastening member 15 may be in the connector 35.

The support 50 may be interposed between the connector 35 and the BMS circuit 60 such that, if the connector 35 and the BMS circuit 60 have different installed inclinations, the BMS circuit 60 may be stably supported in the upper position of the holder 10 while allowing for a reliable electrical connection between the busbar 30 and the BMS circuit 60.

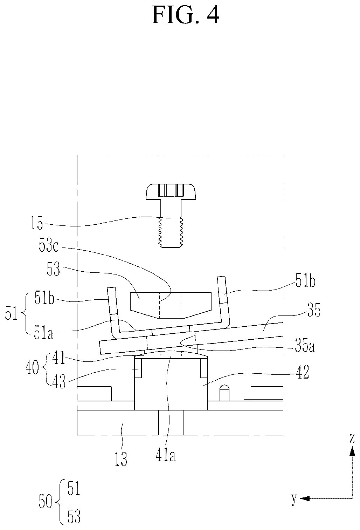

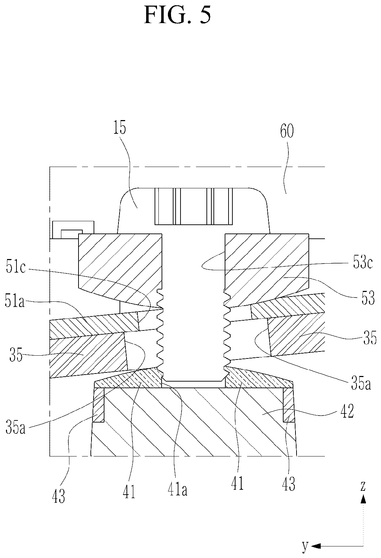

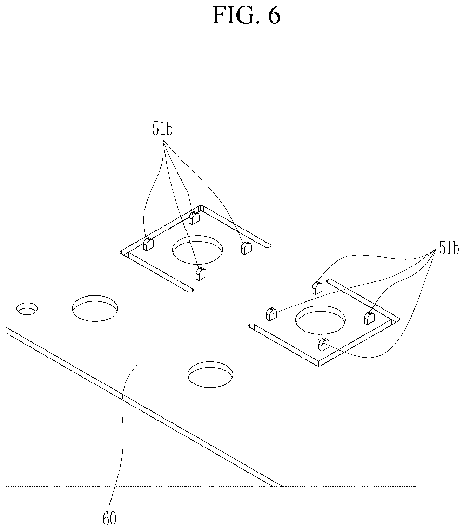

FIG. 3 is a perspective view of the main part schematically illustrating the support installed on the upper side of the connector of the busbar according to one or more embodiments of the present disclosure, FIG. 4 is a side view schematically illustrating the support installed on the upper side of the connector of the busbar of FIG. 3 according to one or more embodiments of the present disclosure, FIG. 5 is a cross-sectional view of the main part schematically illustrating the connector of the busbar and a BMS circuit 60 electrically connected by the support according to one or more embodiments of the present disclosure, and FIG. 6 is a perspective drawing of the main part schematically illustrating a protrusion of the support inserted into and fixed to the BMS circuit 60 according to one or more embodiments of the present disclosure.

Referring to FIGS. 3 to 6 to more specifically describe the support 50, the support 50 may include a fixed part 51 seated on the connector 35 of the busbar 30, a part of which is affixed to the BMS circuit 60, and a round block 53 seated on the fixed part 51 and supporting the lower surface of the BMS circuit 60.

The fixed part 51 may be at least partially fixedly installed in the BMS circuit 60 while being on the upper surface of the connector 35 of the busbar 30.

The fixed part 51 may include a supporting plate 51a on the surface of the connector 35 of the busbar 30, and an insertion protrusion 51b protruding from an edge of the supporting plate 51a and inserted into and affixed to the BMS circuit 60.

The supporting plate 51a may include a flat surface on the lower surface and in surface contact with the upper surface of the connector 35. A second through hole 51c may be in the supporting plate 51a for the fastening member 15 to pass through.

The supporting plate 51a may have a substantially rectangular or square planar shape, and an insertion protrusion 51b may protrude from the edge.

A plurality of insertion protrusions 51b may protrude from the edge of the supporting plate 51a and may be inserted into the BMS circuit 60. The insertion protrusion 51b may protrude in a pin shape at each of the four corner positions of the square plane shape of the supporting plate 51a and may be inserted and affixed to the BMS circuit 60.

The round block 53 may be on the upper part of the supporting plate 51a.

The round block 53, while on the upper part of the supporting plate 51a, may stably support the BMS circuit 60 in a horizontal state (e.g., in the x/y plane FIG. 3) despite changes in the inclination of the connector 35 of the busbar 30.

For example, the round block 53 may have a round surface 53a on a first side surface supported on a surface of the supporting plate 51a, and a second side surface opposite the first side surface may be supported on a lower surface of the BMS circuit 60.

In other words, the first side surface of the round block 53 may have the round surface 53a that contacts the supporting plate 51a, and the second side surface facing or opposite the first side surface may have a flat surface 53b that is in surface contact with the BMS circuit 60.

The round block 53 may be between the BMS circuit 60 and the supporting plate 51a, but the part where the round surface 53a contacts the supporting plate 51a may change depending on the slope of the installed connector 35, thereby stably supporting the BMS circuit 60 in a horizontal state.

A fastening hole 53c through which the fastening member 15 may be coupled, may be in the round block 53.

Thus, the fastening member 15 may be coupled to the fastening hole 53c of the round block 53 so that a part thereof passes through the first through hole 35a of the connector 35 and the second through hole 51c of the supporting plate 51a, thereby affixing the round block 53 to the upper side of the connector 35. The end of the fastening member 15 may be inserted into the groove 41a in the round part 41.

Accordingly, the fastening member 15 may stably connect the connector 35 of the busbar 30 between the holder 10 and the BMS circuit 60 by passing through the fastening hole 53c, the first through hole 35a and the second through hole 51c and stably support the BMS circuit 60 in a horizontal state.

As described above, the rechargeable battery pack 100 of the present embodiment may have an inclined state of the busbar 30 that electrically connects the connection tab 20 installed on the holder 10 and the BMS circuit 60 by the support 50, thereby stably supporting the BMS circuit 60 in a horizontal state on the upper side of the holder 10. Accordingly, the BMS circuit 60 and the busbar 30 may be stably electrically connected by the support 50, thereby improving durability.

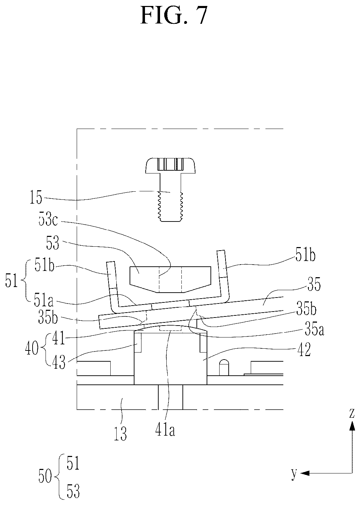

FIG. 7 is a cross-sectional view of the main part schematically illustrating the support 50 installed on the upper side of the connector of the busbar 30 according to one or more embodiments of the present disclosure. The same reference numbers as in FIGS. 1 to 6 refer to identical or similar members with the same or similar functions. Hereinafter, detailed descriptions of the same reference numbers will be omitted.

As shown in FIG. 7, a tapered surface 35b may be at the edge of the first through hole 35a at the connector 35 of the busbar 30 according to one or more embodiments of the present disclosure.

The tapered surface 35b may increase the area where the first through hole 35a of the connector 35 contacts the round part 41 if the connector 35 is seated on the round part 41 at the upper part of the supporting protrusion 42.

Accordingly, the connector 35 is seated on the round part 41 with a larger contact area, enabling more stable seating.

The present disclosure provides a rechargeable battery pack capable of stably supporting and electrically connecting a BMS circuit 60 even if the connection portion between the busbar 30 and the BMS circuit 60 are non-horizontal. It is possible to stably support the inclined state of the busbar 30 electrically connected to the BMS circuit 60 at the upper part of the holder by the support, thereby supporting the BMS circuit 60 in a horizontal state at the top of the holder. Accordingly, the BMS circuit 60 and the busbar 30 may be stably electrically connected in a horizontal state by the support, thereby improving durability.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

**<Description of symbols>**

| | | | |
|---|---|---|---|
| 10 | Holder | 11 | First holder |
| 11a | First accommodation space | 12 | Unit battery cell |
| 13 | Second holder | 13a | Second accommodation space |
| 20 | Connection tab | 21 | First connection tab |
| 21a | First tab plate | 21b | First tab protrusion |
| 23 | Second connection tab | 23a | Second tab plate |
| 23b | Second tab protrusion | 30 | Busbar |
| 31 | Busbar plate | 33 | Connection protrusion |
| 35 | Connector | 35a | First through hole |
| 35b | Tapered surface | 40 | Round support |
| 41 | Round part | | |
| 42 | Supporting protrusion | 43 | Fixing piece |
| 50 | Support | 51 | Fixed part |
| 51a | Supporting plate | 51b | Insertion protrusion |
| 51c | Second through hole | 53 | Round block |
| 53a | Bound surface | 53b | Flat surface |
| 60 | BMS circuit | | |

## Claims

1. A rechargeable battery pack (100), comprising:
a holder (10) with an accommodation space therein;
a plurality of unit battery cells (12) inserted into the accommodation space;
a connection tab (20) electrically connecting the plurality of unit battery cells (12) at an upper part of the holder;
a busbar (30) including a connector (35) electrically connected to the connection tab (20) and extending to the upper part of the holder (10);
a BMS circuit (60) electrically connected to the connector; and
a support (50) between the connector (35) and the BMS circuit, and supporting the BMS circuit (60) on an upper surface of the holder.

2. The rechargeable battery pack (100) as claimed in claim 1, wherein the holder (10) comprises:
a first holder (11) including a plurality of accommodation spaces accommodating parts of the plurality of unit battery cells (12) and a first connection tab (21) at a lower part of the first holder (11); and
a second holder (13) including a plurality of accommodation spaces accommodating other parts of the unit battery cells (12) and a second connection tab (23) at an upper part of the second holder (13).

3. The rechargeable battery pack (100) as claimed in claim 2, wherein the busbar (30) comprises:
a busbar plate (31) extending from a side surface of the second holder (13) in a first direction and fixed by a fastening member (15);
a connection protrusion (33) protruding from an edge of the busbar plate (31), extending toward the upper part of the second holder (13), and electrically connected to the first connection tab (21); and
a connector (35) protruding from the edge of the busbar plate (31), extending toward the upper part of the second holder (13), and electrically connected to the BMS circuit (60).

4. The rechargeable battery pack (100) as claimed in claims 1 to 3, wherein the support (50) comprises a round block (53) supporting a lower surface of the BMS circuit (60).

5. The rechargeable battery pack (100) as claimed in claim 4, wherein the round block (53) has a round surface (53a) supported by an upper side of the connector (35) on a first side surface thereof, and a flat surface (53b) supported by the lower surface of the BMS circuit (60) on a second side surface facing the first side surface.

6. The rechargeable battery pack (100) as claimed in claim 4 or 5, wherein a supporting protrusion (42) supporting the connector (35) protrudes from the upper surface of the holder.

7. The rechargeable battery pack (100) as claimed in claim 6, wherein a round support (40) supporting the connector (35) is in an upper part of the supporting protrusion.

8. The rechargeable battery pack (100) as claimed in claim 7, wherein the round support (40) comprises:
a round part (41) on the upper part of the supporting protrusion (42) and having a round surface (53a) on the upper part thereof; and
a pair of fixing pieces (43) bent in a lateral direction of the connector (35) on opposite sides of the round part (41).

9. The rechargeable battery pack (100) as claimed in claim 8, wherein the pair of fixing pieces (43) are inside of a side surface of the round part (41).

10. The rechargeable battery pack (100) as claimed in claim 8 or 9, wherein the support (50) further comprises a fixed part (51) seated on the connector (35) of the busbar (30), a part of which is affixed to the BMS circuit (60).

11. The rechargeable battery pack (100) as claimed in claim 10, wherein the fixed part (51) comprises:
a supporting plate (51a) on a surface of the connector (35) of the busbar (30); and
an insertion protrusion (51b) protruding from an edge of the supporting plate (51a) and inserted into and affixed to the BMS circuit (60).

12. The rechargeable battery pack (100) as claimed in claim 11, wherein a fastening hole (53c) through which a fastening member (15) is coupled is in the round block (53), a first through hole (35a) through which the fastening member (15) passes is on the connector (35), and a second through hole (51c) through which the fastening member (15) passes is on the supporting plate (51a).

13. The rechargeable battery pack (100) as claimed in claim 12, wherein a groove (41a) is on the upper surface of the round support (40) into which an end of the fastening member (15) is inserted.

14. The rechargeable battery pack (100) as claimed in claim 12 or 13, wherein a tapered surface (35b) is at an edge of the through hole in contact with the round part (41) of the supporting protrusion (42).

15. The rechargeable battery pack (100) as claimed in claims 1 to 14, wherein the holder (10) may have the plurality of accommodation spaces (11a, 13a) therein so that the plurality of unit battery cells (12) may be accommodated therein, wherein the accommodation spaces (11a, 13a) are in plural numbers inside the holder (10) and may be arranged in a plurality of rows and columns with respect to the entire area of the holder (10), so that the plurality of unit battery cells (12) may be inserted into the holder (10) in a plurality of rows and columns.
